# EUROPEAN PATENT SPECIFICATION

(11) **EP 2 645 908 B1**
(45) Date of publication and mention of the grant of the patent: **25.03.2015**
(21) Application number: 11790785.7
(22) Date of filing: 01.12.2011
(51) Int. Cl.: A47J 31/36

(54) **BEVERAGE MACHINE HAVING A CAPSULE PASSAGE WITH A GATE**
GETRÄNKEMASCHINE MIT KAPSELDURCHLASS MIT EINER SCHRANKE
MACHINE POUR BOISSON AYANT UN PASSAGE DE CAPSULE COMPRENANT UNE PORTE

(30) Priority: 01.12.2010 EP 10193237
(43) Date of publication of application: 09.10.2013
(73) Proprietor: Nestec S.A., 1800 Vevey (CH)
(72) Inventor: KRISTLBAUER, Jürgen, CH-3052 Zollikofen (CH)
(74) Representative: Schnyder, Frank Simon
(86) International application number: PCT/EP2011/071559
(87) International publication number: WO 2012/072766

(56) References cited:
- EP-A1- 1 767 129
- WO-A1-2010/103044
- FR-A1- 2 916 336

## Description

### Field of the Invention

The field of the invention pertains to beverage preparation machines, in particular using capsules of an ingredient of the beverage to be prepared, such as beverage preparation machines having a motorized ingredient chamber that can be opened and closed for inserting a beverage ingredient into the chamber and/or removal of a used ingredient therefrom.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient.

### Background Art

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like.

Especially in the field of coffee preparation, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

Brewing devices have been developed to facilitate insertion of a "fresh" capsule and removal of the capsule upon use.

WO 2005/004683 and WO 2007/135136 relate to such brewing devices. The devices comprise a frame, a fixed holding part for the capsule, a movable holding part which is mounted relative to the frame in a sliding relationship, one or two knuckle joint mechanisms that provide a mechanical system which enables to close in a steady and fluid-tight manner the holding parts about the capsule while also resisting to the counter-force acting in re-opening and generated by the internal brewing pressure, and a handle for directly levering the knuckle joint mechanism. Such a device forms a simple assembly enabling insertion of the capsule by vertical fall through a passage in the frame and removal of the used capsule in the same direction as the insertion direction. The handle may serve to cover and uncover the passage for the capsule. The movable parts of the brewing device are actuated manually via the handle. The manual force required to move the movable parts varies during closure and opening of the machine and depends on the dimensional tolerances of the capsules used.

WO 2009/043630 discloses a beverage preparation machine including a brewing unit having a front part with a passage for inserting a capsule into the brewing unit. The front part is arranged to telescope out of the machine's housing for uncovering the passage for inserting a capsule into the brewing unit and telescopes into the brewing unit for sliding the passage under the housing and thus covering the passage by the housing.

From a different approach, the actuation of the movable part of the brewing device may be motorized. Such a system is for example disclosed in EP 1 767 129. In this case, the user does not have to provide any manual effort to open or close the brewing device. The brewing device has a capsule insertion passage provided with a safety door assembled to the movable part of the brewing device via a switch for detecting an undesired presence of a finger in the passage during closure and prevent injuries by squeezing.

Document FR-A-2916336 discloses a machine for preparing a beverage according to the preamble of independent claim 1.

### Summary of the Invention

The invention relates to a machine for preparing and dispensing a beverage. For instance, the machine is a coffee, tea, chocolate, cacao, milk or soup preparation machine. In particular, the machine is arranged for preparing within a beverage processing module a beverage by passing hot or cold water or another liquid through a capsule containing an ingredient, such as a flavouring ingredient, of the beverage to be prepared, such as ground coffee or tea or chocolate or cacao or milk powder.

Such beverage preparation typically includes the mixing of a plurality of beverage ingredients, e.g. water and milk powder, and/or the infusion of a beverage ingredient, such as an infusion of ground coffee or tea with water. For instance, a predetermined amount of beverage is formed and dispensed on user-request, which corresponds to a serving. The volume of such a serving may be in the range of 25 to 200 ml, e.g. the volume for filling a cup or mug, depending on the type of beverage. Formed and dispensed beverages may be selected from ristrettos, espressos, lungos, cappuccinos, café latte, americano coffees, teas, etc... In particular, a coffee machine may be configured for dispensing espressos, e.g. an adjustable volume of 20 to 60 ml per serving, and/or for dispensing lungos, e.g. a volume in the range of 70 to 150 ml per serving.

In particular, the beverage preparation machine includes:
- an ingredient processing module that comprises a first part and a second part movable relative to the first part from a position for housing therein an ingredient to a transfer position for inserting this ingredient into the processing module and/or for evacuation thereof from the processing module;
- a passage for inserting this ingredient into the processing module and/or evacuating such ingredient therefrom; and
- a gate driven by the movable second part and associated with the passage and movable between a position opening the passage and a position closing the passage.

Such gate may be used to prevent projections of hot liquid and/or vapour out of the capsule passage and/or indicate to a user when the processing module is in state for receiving the ingredient and when it is not, respectively.

As discussed above, the ingredient is optionally inserted into the processing module and/or evacuated therefrom within an ingredient capsule, e.g. an aluminium or plastic or paper enclosure containing the ingredient.

In accordance with the invention, the gate is connected to the movable second part by an intermediate mechanical conversion mechanism for converting movements of the movable second part into movements of the gate.

Hence, by using an intermediate conversion mechanism, the gate may be located spaced apart from the movable second part and/or have a displacement path, direction and/or extent that is different to the movement of the movable second part. Thus a greater flexibility is provided for arranging the gate and its movements relative to the position and movement of the movable second part, e.g. adapt to the particular geometry of the machine, e. g. the outermost housing and/or the configuration of the channel.

The freedom in shaping the machine, in particular in relation to the machine's movable second part, the gate and its displacements, the housing and the ingredient passage is correspondingly increased by using the intermediate mechanical conversion mechanism of the invention.

The gate may be a plate-like or grid-like element, planar or arched or the gate may be a simple stopper, e.g. one or more bars, movable to close and open the capsule passage. The gate may be slideable and/or pivotable relative to the passage.

The intermediate mechanical conversion mechanism comprises a gear mechanism. For instance, the gear mechanism comprises: at least one of a friction wheel and a toothed wheel; and/or at least one of a friction rack and a toothed rack. For example, the intermediate mechanical conversion mechanism comprises a first rack fixed to the movable second part, a second rack fixed to the gate and a rotatable wheel, in particular a wheel pivotally mounted to a machine structure such as a frame or a housing, transmitting movements between the second part and the gate. The intermediate mechanical conversion mechanism can comprise at least one belt.

The intermediate mechanical conversion mechanism may be arranged to convert a displacement of the movable second part in one direction into a displacement of the gate in a diverging direction, in particular in a generally opposite direction. Such an arrangement may be obtained by a simple friction and/or toothed wheel and/or a belt that invert or diverge the movement of the gate relative to the movement of the movable second part.

The intermediate mechanical conversion mechanism can be arranged to convert a displacement of the movable second part in one direction into a displacement of the gate in a generally similar direction. This may be achieved by using a belt and/or a couple of toothed/friction serial wheels to transmit movements between toothed/friction racks.

The racks may be straight and/or arched for a transmission of a straight and/or pivoting movement.

The intermediate mechanical conversion mechanism may be used to space the gate apart from the movable second part, and/or to increase the extent of a movement of the gate relative to the movement of the movable second part or vice versa.

Further transmission means, e.g. gear element(s), may be used for multiplication or de-multiplication of the movement of the gate relative to the movement of the movable second part.

The machine may include an outermost housing. In this case, the ingredient passage can extend from the outermost housing to the ingredient processing module. Optionally, the gate is movable along the housing generally parallel thereto. Namely, the housing and the gate may have generally parallel faces and the gate is moved in a direction parallel to these faces.

The movable part can be actuated by a motor, in particular controlled by a control unit linked to a user-interface. The machine may comprise a handle for manually actuating the movable part.

The ingredient passage can be generally upright so that the ingredient, optionally contained within a capsule, is movable in the passage under the effect of gravity.

The passage may comprise an insertion portion guiding the ingredient into the processing module and an evacuation portion guiding the ingredient from the processing module. The gate may be associated with the insertion portion or with the evacuation portion. The machine may include two such gates, namely an insertion gate for a insertion portion and an evacuation gate for an evacuation portion. The gates may be mutually coordinated or may be associated with the insertion of a capsule on the one hand and the evacuation of a capsule on the other hand. In each case, the gates are driven by the motion of the movable second part during capsule insertion and capsule evacuation.

The gate can be driven in a generally horizontal direction, the movable part being optionally movable in a horizontal direction as well.

The gate may be configured to support in the closed position the ingredient and to free the ingredient into or out of the passage when moved into the open position. For instance, the gate in the closed position has a shape adapted to hold the ingredient or delimits together with an adjacent machine part, e.g. housing part, such a shape. This shape may for instance generally match part of a capsule or the shape may generally be adapted to hold a capsule containing such an ingredient.

Typically, the beverage preparation machine comprises a stationary structure, such as a housing and/or a frame. The structure may be arranged to rest on a support surface such as a table. The second part can be made movable relative to the first part and relative to the stationary structure. The first part may be stationary relative to the structure or movable thereto.

The second part can be arranged to move in a direction, in particular an arched and/or linear direction. Typically, the first and second parts in their processing position delimit a cavity for housing the beverage ingredient, such as tea or coffee or chocolate or powder milk. The ingredient processing module may include an upstream fluid circuit for delivering a carrier liquid, such as water, into the cavity and a downstream fluid circuit having a beverage outlet for delivering from the cavity the beverage formed by the carrier liquid flavoured by the beverage (flavouring) ingredient, the ingredient being in particular inserted into the cavity within a capsule.

The ingredient processing module can be configured to circulate automatically such a carrier liquid into the cavity containing the ingredient when the first and second parts reach the processing position, e.g. the position for housing the ingredient in the processing module.

### Brief Description of the Drawings

The invention will now be described with reference to the schematic drawings, wherein:
- Figures 1 to 3 show part of a machine according to invention having an ingredient processing module, an ingredient passage, a gate and an intermediate mechanical conversion mechanism in three different positions;
- Figures 4 and 5 show a larger part of this beverage machine including the ingredient processing module, a motor, a control unit and a user-interface; and
- Figures 4a and 5a illustrate the motorization of a movable part of the processing module shown in Figures 1 to 4 and 5.

### Detailed description

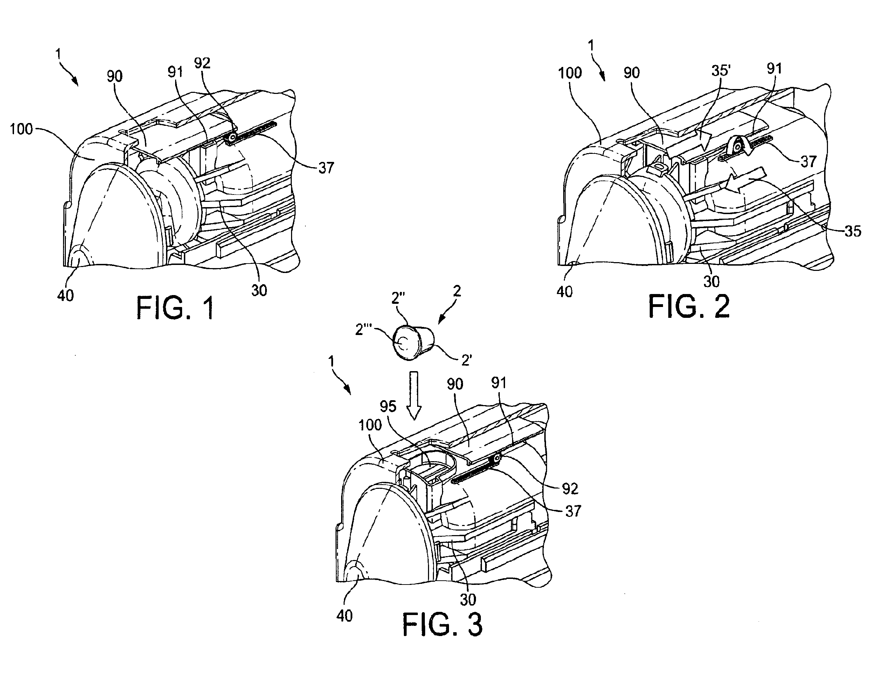

Figures 1 to 5a illustrate an exemplary embodiment of a beverage preparation machine 1 in accordance with the invention.

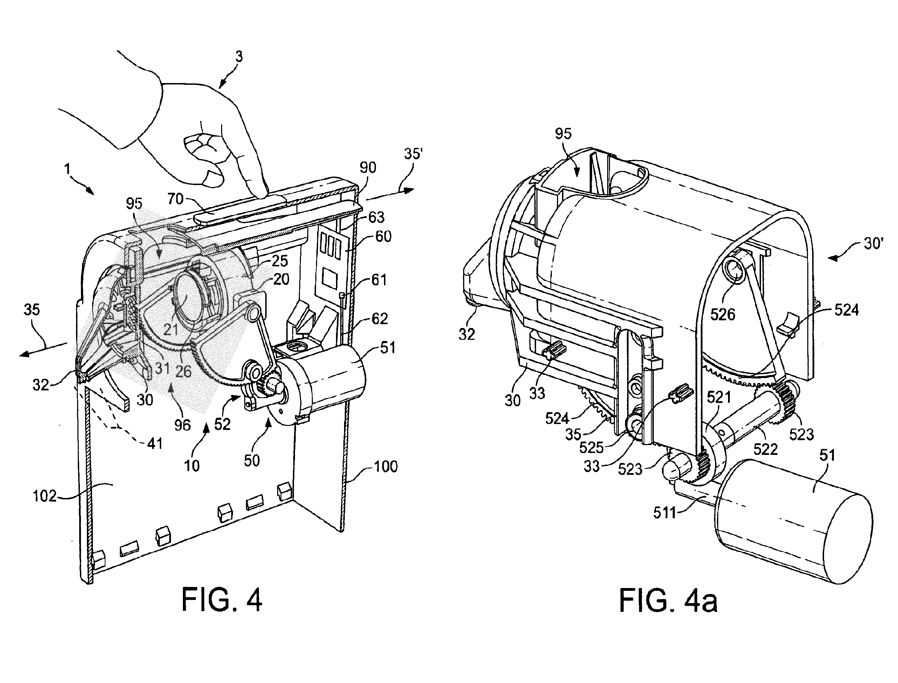

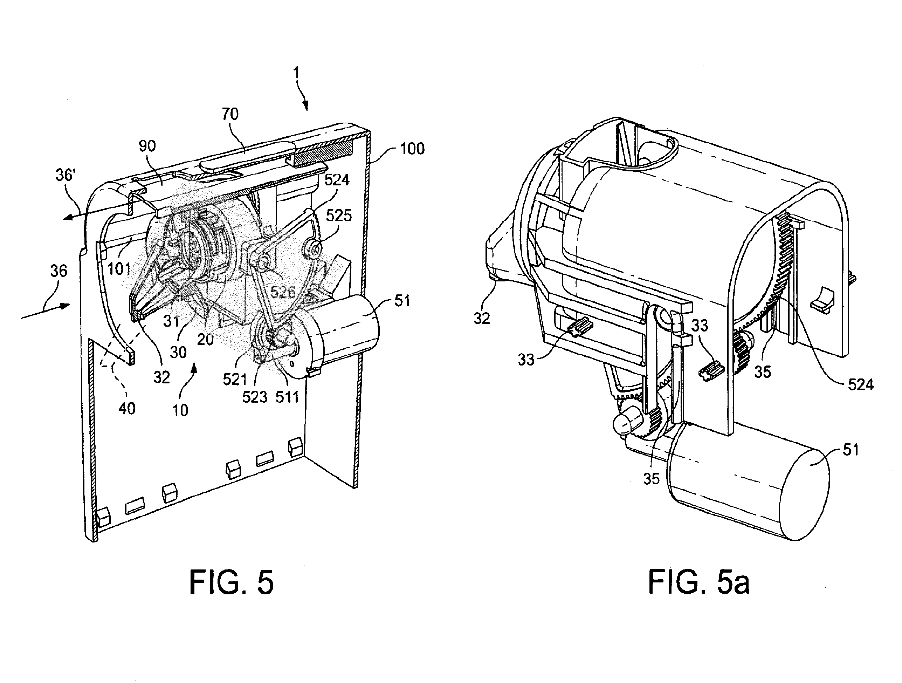

Machine 1 has an ingredient processing module 10 that comprises a first part 20 and a second part 30 movable relative to first part 20 from a position (Figs 1, 5, 5a) for housing and processing therein an ingredient 2 for forming a beverage to a transfer position (Figs 3, 4, 4a) for inserting such ingredient 2 into processing module 10 and/or for evacuation thereof from module 10. An intermediate position between the processing position and the transfer position is illustrated in Fig. 2. Such ingredient is typically a flavouring ingredient pre-portioned in a capsule 2.

For example, first part 20 can be more or less fixed in a structure 100, e.g. frame or housing, of machine 1 and second part 30 may be driven to and away from first part 20 between the transfer and the processing positions. In particular, second part 30 can be movable and has an opening 30', as indicated in Fig. 4a, that may slide back and forth over first part 20. Lateral support elements 33 are provided for guiding second part 30 in slots 101 of structure 100. First part 20 defines a chamber 21 and second part 30 has a member 31, e.g. generally shaped as a plate. Chamber 21 and member 31 are spaced apart in Figs 3, 4 and 4a for receiving and/or evacuating an ingredient 2 therebetween. Chamber 21 and member 31 are brought together in Figs 1, 5 and 5a for delimiting an inner ingredient processing cavity for holding and housing the ingredient, such as tea or coffee or chocolate or powder milk. As mentioned above, the ingredient may be inserted pre-portioned within a capsule 2 into this cavity.

Typically, first and second parts 20,30 in their processing position can be arranged for mixing liquid, such as an incoming flow of hot water, with a flavouring ingredient, e.g. coffee or tea, to form a flavoured beverage. The flavouring ingredient may in particular be supplied as a solid, e.g. ground coffee, tea leaves, powder milk, etc...

In a particular embodiment, first and second parts 20,30 form a brewing unit, e.g. of a tea or coffee machine. The flavouring ingredient may be supplied within capsule 2 into the brewing unit. The interaction between the brewing unit and the flavouring ingredient, when provided within a capsule, may be of the type disclosed in EP 1 859 714 or in EP 2 205 133.

Parts 20,30 in their processing position may be arranged for holding a pre-portioned flavouring ingredient supplied within capsule 2 while liquid is circulated therethrough to form a beverage. Such a flavouring capsule 2 may have a cup-shaped body 2' with a rim 2" for fixing a lid 2"' thereon, as illustrated in Fig 3. Body 2' has a cavity configured for containing a pre-portioned amount of flavouring ingredient, e.g. from 3 to 12 g ground coffee.

When closed capsules 2 of flavouring ingredients are used, first and second parts 20,30 may include a capsule opener such as blades and/or a tearing tool, e.g. a plate with a tearing profile, for instance as known form Nespresso™ machines.

In particular, processing module 10 includes an upstream fluid arrangement, e.g. incorporating a liquid driver, such as a pump, and a thermal conditioner, such as a heater, for circulating thermally conditioned liquid, such as water, from a source, e.g. a liquid reservoir, into the ingredient processing cavity. Examples of upstream fluid arrangements are disclosed in WO 2009/074550 and in WO 2009/130099.

Moreover, processing module 10 comprises a downstream fluid arrangement with an outlet member 40 for dispensing to an area for dispensing beverage to a user, e.g. an area for placing a user-cup or a user-mug, the beverage formed in the cavity containing the ingredient mixed with the circulating liquid. The dispensing area may be delimited at the bottom by a support surface for holding a user cup or mug. Such support surfaces are well known in the art, e.g. as disclosed in EP 1 867 260 and WO 2009/074557.

Outlet member 40 is in fluid communication with the ingredient processing cavity, downstream thereof, via liquid guide member 32. Guide member 32 can be fixed to movable part 30.

Machine 1 may have a collector receptacle (not shown) for collecting used ingredients, such as tea leaves or ground coffee, e.g. within used capsules, and waste liquid. The collector receptacle, e.g. waste collector, may be located in a lower part 102 of structure 100 of machine 1 and have an upper compartment for solids and a lower compartment for liquids. Collector receptacle may be insertable, e.g. slidable, into a cavity formed in the machine and removable therefrom for servicing, e.g. emptying the solids and/or liquids contained therein. For example, the storage capacity of the collector receptacle for accumulating used ingredient may be aligned to the storage capacity of reservoir for the supply of liquid such as water, e.g. as taught in PCT/EP10/056194.

Furthermore, processing module 10 can include a drop evacuation member 41 (in dotted lines in Fig. 4) for collecting residual drops in the downstream fluid arrangement when the machine is not expected to dispense a beverage; typically when processing module 10 is in the transfer position as illustrated in Fig. 4. Evacuation member 41 is configured to be in fluid configuration with liquid guide member 32 and arranged to evacuated liquid therefrom into a service unit located inside machine 1 generally underneath processing module 10. For example, the service unit is of the type of the above discussed collector receptacle.

The collector receptacle can be positioned underneath parts 20, 30 to collect upon beverage preparation the used flavouring ingredient, e.g. ground coffee or tea, evacuated to the receptacle via an ingredient evacuation passage 96, e.g. by gravity. The receptacle typically has an anti-clogging arrangement, as for example taught in WO 2009/074559 and in WO 2009/135869, which are hereby incorporated by way of reference.

Ingredient processing module 10 can be configured to circulate automatically the liquid into the cavity containing the ingredient, optionally within a capsule, when first and second parts 20,30 reach the processing position for housing the ingredient. An automatic ingredient recognition system may be used to parameterize the processing of the ingredient automatically.

Beverage machine 1 typically includes one or more of the following components:
a) Processing module 10, e.g. a fluid circuit including a brewing unit, delimiting in the processing position an inner flavouring chamber for receiving and housing an ingredient of the beverage such as a flavouring ingredient, in particular a pre-portioned ingredient supplied within capsule 2, and for guiding via an inlet an incoming flow of liquid for flavouring thereof, such as water, through this ingredient to a beverage outlet;
b) an in-line heater for heating this flow of liquid to be supplied to ingredient 2;
c) a pump for pumping liquid through the in-line heater;
d) one or more fluid connecting members for guiding liquid from a source of liquid, such as tank of liquid;
e) an electric control unit 60, in particular comprising a printed circuit board (PCB), for receiving instructions from a user via an input user-interface and for controlling the in-line heater and the pump; and/or
f) one or more sensors for sensing at least one characteristic selected from characteristics of processing module 10, the in-line heater, the pump, the liquid tank, an ingredient collector, a flow of the liquid (e.g. by a flowmeter), a pressure of the liquid and a temperature of the liquid, and for communicating such characteristic(s) to control unit 60.

The heater may be a thermoblock or an on demand heater (ODH), for instance an ODH type disclosed in EP 1 253 844, EP 1 380 243 and EP 1 809 151. Examples of suitable brewing units and capsule management are for example disclosed in WO 2005/004683, WO2007/135136 and WO 2009/043630, which are hereby incorporated by way of reference. Suitable fluid circuits of beverage preparation modules are for instance disclosed in WO 2009/074550 and WO 2009/130099, which are hereby incorporated by way of reference.

Furthermore, in this particular embodiment of the invention, machine 1 includes a motor means 50 for relatively moving first and second parts 20,30 from the processing position for housing ingredient 2 (Figs 1, 5 and 5a) to the transfer position Fig. 3, 4 and 4a) and/or vice versa. Motor means 50 comprises an electric motor 51 and a mechanical converter 52 for converting movements from motor 51 into relative movements between first and second parts 20,30.

Figs 4a and 5a illustrate motor 51 and converter 52 driving downstream part 30 from the transfer position (Fig. 4a) to the processing position (Fig. 5a).

In particular, mechanical converter 52 may include a gear, e.g. toothed gear, and/or cam arrangement. For instance, converter 52 includes a toothed wheel 521 that engages with a worm gear 511 formed on the rotating drive axis of motor 51. Toothed wheel 521 is fixed via rod 522 to a pair of transmission toothed wheels 523. Latter wheels 523 engage with corresponding toothed wheels 524, e.g. wheel sectors, that bear each a cam-follower 525 for cooperation with a cam 35 of movable second part 30 of processing module 10. Wheels 524 are pivotally mounted via a pivoting axis 526 on a frame or housing or another part of machine 1, such as onto part 20 of processing module 10. Likewise, rod 522 may be pivotally mounted on such a frame or housing 100 or another part of machine 10, e.g. part 20.

Furthermore, machine 1 has a control unit 60 (illustrated in Fig. 4) for controlling motor means 50 to relatively move first and second parts 20,30. Typically, control unit 60, e.g. a printed circuit board (PCB) with a controller or processor and memory device etc..., is electrically connected to a triac or another electrically controlled switch 61 for controlling the electric powering of motor 51 via an appropriate electric connection 62.

Machine 1 also includes a user-interface 70 connected to control unit 60, e.g. via an appropriate electric connection 63. User-interface 70 is arranged for sensing a user-request to relatively move first and second parts 20,30 by motor means 50 controlled by control unit 60. For instance, user-interface is a touch-sensitive interface, e.g. a push button or a capacitive button or a piezoelectric button.

In the particular example illustrated in the appended Figures, first and second parts 20,30 are relatively movable by motor means 50 in a linear direction, namely in a straight direction. Alternatively, the first and second parts can be relatively movable by the motor means in an arched direction, or in an arched and linear direction, e.g. sequentially arched and then linear and/or vice versa.

Typically, machine 1 has a stationary structure 100, such as a housing and/or a frame, the second part 30 being movable by motor means 50 relative to the first part and relative to the stationary structure. The first part may include a fixed structure 25, in particular including a hydraulic cylinder, and a secondary structure 26, such as a hydraulic piston member including an ingredient or capsule cage. Secondary structure 26 may be slightly movable relative to fixed structure 25, for example to adjust the closing distance between first and second relatively movable parts 20,30, e.g. to ensure proper handling of ingredient/capsule 2 inserted therebetween. Examples of such hydraulic positioning are for instance disclosed in EP 2 142 054.

The exemplary embodiment of machine 1 according to the invention will now be discussed in greater details in relation to ingredient passage 95,96, ingredient gate 90 and an intermediate mechanical conversion mechanism 37, 91, 92.

The ingredient passage has an insertion portion 95 for inserting ingredient 2 into the processing module 10 and an evacuation portion 96 for evacuating ingredient 2 therefrom.

Ingredient gate 90 is associated with ingredient passage 95,96 and is driven by movable second part 30 between a position (Figs 3, 4 and 4a) opening and a position (Figs 1, 5 and 5a) closing passage 95,96.

In accordance with the invention, gate 90 is connected to movable second part 30 by intermediate mechanical conversion mechanism 37,91,92 for converting movements of movable second part 30 into movements of gate 90.

The intermediate mechanical conversion mechanism may comprises a gear mechanism 37,91,92. Such conversion mechanism may comprise: at least one of a friction wheel and a toothed wheel 92; and/or at least one of a friction rack and a toothed rack 37,91. For instance, intermediate mechanical conversion mechanism comprises a first rack 37 fixed to movable second part 30, a second rack 91 fixed to gate 90 and a wheel 92 driven in rotation by the movement of first rack 37 so as to drive second rack 91. In particular, wheel 92 is pivotally mounted to a machine structure such as a frame or a housing 100 or a part fixed thereto e.g. first part 20, so as to transmit movements of second part 30 to gate 90.

In a different embodiment, intermediate mechanical conversion mechanism may comprise at least one belt as such or in combination with a gear mechanism, e.g. of the above type.

Intermediate mechanical conversion mechanism 37,91,92 is arranged to convert a displacement of the movable second part 30 in one direction 35,36 into a displacement of the gate in a diverging direction, in particular in a generally opposite direction 35',36', as illustrated in Figs 2, 4 and 5. In another embodiment (not shown), the intermediate mechanical conversion mechanism can be arranged to convert a displacement of the movable second part in one direction into a displacement of the gate in a generally similar direction.

Hence, machine 1 may include an outermost housing 100. Ingredient passage 95,96 can extend from outermost housing 100 to ingredient processing module 10, the gate 90 being movable along a portion of housing 100 generally parallel thereto, as illustrated in Figs 1 to 4 and 5.

As mentioned above, movable second part 30 is actuated by motor 51 and thus gate 90 is, via part 30, also (indirectly) actuated by motor 51. In a different embodiment, the second part can be manually actuated, e.g. via a handle, and thus gate is also actuated manually. An example of suitable manual actuation of the second movable part is disclosed in WO 2005/004683, the content of which is hereby incorporated by way of reference.

Passage 95,96 is generally upright so that ingredient 2 is movable in the passage under the effect of gravity. Passage 95,96 extends inbetween parts 20,30 in the open position, as illustrated in Figs 3 and 4. As mentioned above, the passage comprises an insertion portion 95 guiding ingredient 2 from housing 100 into processing module 10 and an evacuation portion 96 guiding ingredient 2 from processing module to a used ingredient collector located in an area 102 underneath module 10.

Gate 90, e.g. a generally plate-like member, can be drivable in a generally horizontal direction, movable part 30 being optionally movable in a horizontal direction. Alternatively, the gate can be made pivotable optionally in combination with a linearly movable second part, or vice versa. In the latter case, a linear movement is converted into a rotational movement, or vice versa, by the intermediate mechanical conversion mechanism, e.g. by means of a wheel and a cooperating rack only.

Gate 90 may be configured to support in the closed position (Figs 1 and 5) ingredient 2, especially contained within a capsule, and to free ingredient 2 into or out of the passage 95,96 when gate 90 is moved into the open position (Figs 3 and 4).

## Claims

1. A machine (1) for preparing a beverage comprising:
- an ingredient processing module (10) that comprises a first part (20) and a second part (30) movable relative to the first part from a position for housing therein an ingredient (2) to a transfer position for inserting said ingredient into the processing module and/or for evacuation thereof from the processing module;
- a passage (95,96) for inserting said ingredient into the processing module and/or evacuating said ingredient therefrom; and
- a gate (90) driven by the movable second part and associated with the passage and movable between a position opening the passage and a position closing the passage,
the gate (90) being connected to the movable second part (30) by an intermediate mechanical conversion mechanism (37,91,92) for converting movements of the movable second part into movements of the gate,
**characterised in that** the intermediate mechanical conversion mechanism comprises a gear mechanism (37, 91, 92) .

2. The machine of claim 1, wherein the gear mechanism comprises at least one of a friction wheel and a toothed wheel (92).

3. The machine of claim 1 or 2, wherein the gear mechanism comprises at least one of a friction rack and a toothed rack (37,91).

4. The machine of claim 3, wherein the intermediate mechanical conversion mechanism comprises a first rack (37) fixed to the movable second part (30), a second rack (91) fixed to the gate (90) and a rotatable wheel (92), in particular a wheel pivotally mounted to a machine structure such as a frame or a housing (100), transmitting movements between the second part (30) and the gate (90).

5. The machine of any preceding claim, wherein the intermediate mechanical conversion mechanism comprises at least one belt.

6. The machine of any preceding claim, wherein the intermediate mechanical conversion mechanism (37,91,92) is arranged to convert a displacement of the movable second part (30) in one direction (35,36) into a displacement of the gate in a diverging direction (35',36'), in particular in a generally opposite direction.

7. The machine of any one of claims 1 to 5, wherein the intermediate mechanical conversion mechanism is arranged to convert a displacement of the movable second part in one direction into a displacement of the gate in a generally similar direction.

8. The machine of any preceding claim, which comprises an outermost housing (100) and wherein the passage (95,96) extends from the outermost housing to the ingredient processing module (10), the gate (90) being movable along the housing generally parallel thereto.

9. The machine of any preceding claim, wherein the movable part (30) is actuated by a motor (51), in particular controlled by a control unit (60) linked to a user-interface (70).

10. The machine of any one of claims 1 to 8, wherein the machine comprises a handle for manually actuating the movable part.

11. The machine of any preceding claim, wherein the passage (95,96) is generally upright so that said ingredient (2) is movable in the passage under the effect of gravity.

12. The machine of any preceding claim, wherein the passage comprises an insertion portion (95) guiding the ingredient (2) into the processing module (10) and an evacuation portion (96) guiding the ingredient (2) from the processing module.

13. The machine of any preceding claim, wherein the gate (90) is drivable in a generally horizontal direction.

14. The machine of claim 13, wherein the movable part (30) is movable in a horizontal direction.

15. The machine of any preceding claim, wherein the gate (90) is configured to support in the closed position said ingredient (2) and to free the ingredient into or out of the passage (95,96) when moved into the open position.

## Patentansprüche

1. Maschine (1) zur Herstellung eines Getränks mit:
- einem Zutatenverarbeitungsmodul (10), das ein erstes Teil (20) und ein zweites Teil (30) besitzt, das zu dem ersten Teil von einer Position zur Unterbringung einer Zutat (2) zu einer Übergabeposition zum Einschieben der Zutat in das Verarbeitungsmodul und/oder dessen Abführung aus dem Verarbeitungsmodul beweglich ist;
- einem Durchlass (95, 96) zum Einschieben der Zutat in das Verarbeitungsmodul und/oder Abführen der Zutat aus diesem; und
- einer Sperre (90), die durch das bewegliche zweite Teil angetrieben wird und mit dem Durchlass verbunden ist, und zwischen einer Position, die den Durchlass öffnet und einer Position, die den Durchlass schließt, beweglich ist,
wobei die Sperre (90) durch einen dazwischenliegenden mechanischen Umwandlungsmechanismus (37, 91, 92) mit dem beweglichen zweiten Teil (30) verbunden ist, um die Bewegungen des beweglichen zweiten Teils in Bewegungen der Sperre umzuwandeln,
**dadurch gekennzeichnet, dass** der dazwischenliegende mechanische Umwandlungsmechanismus ein Getriebe (37, 91, 92) aufweist.

2. Maschine nach Anspruch 1, wobei das Getriebe mindestens ein Reibrad und ein Zahnrad (92) aufweist.

3. Maschine nach Anspruch 1 oder 2, wobei das Getriebe mindestens eine Reibstange und eine Zahnstange (37, 91) aufweist.

4. Maschine nach Anspruch 3, wobei der dazwischenliegende mechanische Umwandlungsmechanismus eine erste Zahnstange (37) aufweist, die an dem beweglichen zweiten Teil (30) befestigt ist, eine zweite Zahnstange (91) aufweist, die an der Sperre (90) befestigt ist, und ein drehbares Rad (92) aufweist, insbesondere ein Rad, das drehbar an einem Maschinenelement wie einem Rahmen oder einem Gehäuse (100) montiert ist, und Bewegungen zwischen dem zweiten Teil (30) und der Sperre (90) überträgt.

5. Maschine nach einem der vorhergehenden Ansprüche, wobei der dazwischenliegende mechanische Umwandlungsmechanismus mindestens einen Riemen aufweist.

6. Maschine nach einem der vorhergehenden Ansprüche, wobei der dazwischenliegende mechanische Umwandlungsmechanismus (37, 91, 92) so angeordnet ist, dass er eine Verschiebung des beweglichen zweiten Teils (30) in einer Richtung (35, 36) in eine Verschiebung der Sperre in eine andere Richtung (35', 36'), insbesondere in eine im allgemeinen entgegengesetzte Richtung, umwandelt.

7. Maschine nach einem der Ansprüche 1 bis 5, wobei der dazwischenliegende mechanische Umwandlungsmechanismus so angeordnet ist, dass er eine Verschiebung des beweglichen zweiten Teils in eine Richtung in eine Verschiebung der Sperre in eine im allgemeinen ähnliche Richtung umwandelt.

8. Maschine nach einem der vorhergehenden Ansprüche, die ein äußeres Gehäuse (100) aufweist, und wobei sich der Durchlass (95, 96) von dem äußeren Gehäuse zu dem Zutatenverarbeitungsmodul (10) erstreckt, wobei die Sperre (90) entlang dem Gehäuse im allgemeinen parallel dazu beweglich ist.

9. Maschine nach einem der vorhergehenden Ansprüche, wobei das bewegliche Teil (30) durch einen Motor (51) betätigt wird, insbesondere gesteuert durch eine mit einer Benutzerschnittstelle (70) verbundene Steuereinheit (60).

10. Maschine nach einem der Ansprüche 1 bis 8, wobei die Maschine einen Griff zur manuellen Betätigung des beweglichen Teils aufweist.

11. Maschine nach einem der vorhergehenden Ansprüche, wobei der Durchlass (95, 96) im allgemeinen senkrecht verläuft, so dass die Zutat (2) in dem Durchlass unter der Wirkung der Schwerkraft beweglich ist.

12. Maschine nach einem der vorhergehenden Ansprüche, wobei der Durchlass einen Einschubabschnitt (95) aufweist, der die Zutat (2) in das Verarbeitungsmodul (10) führt, und einen Abführungsabschnitt (96), der die Zutat (2) von dem Verarbeitungsmodul wegführt.

13. Maschine nach einem der vorhergehenden Ansprüche, wobei die Sperre (90) in eine im allgemeinen horizontale Richtung antreibbar ist.

14. Maschine nach Anspruch 13, wobei das bewegliche Teil (30) in eine horizontale Richtung beweglich ist.

15. Maschine nach einem der vorhergehenden Ansprüche, wobei die Sperre (90) so ausgebildet ist, dass sie die Zutat (2) in der geschlossenen Position hält, und die Zutat in den Durchlass (95, 96) hinein oder aus ihm heraus freigibt, wenn sie in die offene Position bewegt wird.

## Revendications

1. Machine (1) destinée à préparer une boisson comprenant :
- un module de traitement d'ingrédient (10) qui comprend une première partie (20) et une deuxième partie (30) mobile par rapport à la première partie à partir d'une position destinée à recevoir dans celle-ci un ingrédient (2) jusqu'à une position de transfert destinée à insérer ledit ingrédient dans le module de traitement et/ou destinée à une évacuation de celui-ci à partir du module de traitement ;
- un passage (95, 96) destiné à insérer ledit ingrédient dans le module de traitement et/ou à évacuer ledit ingrédient de celui-ci ; et
- une porte (90) entraînée par la deuxième partie mobile et associée au passage et mobile entre une position ouvrant le passage et une position ferment le passage,
la porte (90) étant reliée à la deuxième partie mobile (30) par un mécanisme de conversion mécanique intermédiaire (37, 91, 92) destiné à convertir des mouvements de la deuxième partie mobile en mouvements de la porte,
**caractérisée en ce que** le mécanisme de conversion mécanique intermédiaire comprend un mécanisme d'engrenage (37, 91, 92).

2. Machine selon la revendication 1, dans laquelle le mécanisme d'engrenage comprend au moins un élément parmi une roue à friction et une roue dentée (92).

3. Machine selon la revendication 1 ou 2, dans laquelle le mécanisme d'engrenage comprend au moins un élément parmi une barre à friction et une barre dentée (37, 91).

4. Machine selon la revendication 3, dans laquelle le mécanisme de conversion mécanique intermédiaire comprend une première barre (37) fixée à la deuxième partie mobile (30), une deuxième barre (91) fixée à la porte (90) et une roue rotative (92), en particulier une roue montée de manière pivotante sur une structure de machine telle qu'un cadre ou un boîtier (100), transmettant des mouvements entre la deuxième partie (30) et la porte (90).

5. Machine selon l'une quelconque des revendications précédentes, dans laquelle le mécanisme de conversion mécanique intermédiaire comprend au moins une courroie.

6. Machine selon l'une quelconque des revendications précédentes, dans laquelle le mécanisme de conversion mécanique intermédiaire (37, 91, 92) est agencé pour convertir un déplacement de la deuxième partie mobile (30) dans une direction (35, 36) en un déplacement de la porte dans une direction divergente (35', 36'), en particulier dans une direction généralement opposée.

7. Machine selon l'une quelconque des revendications 1 à 5, dans laquelle le mécanisme de conversion mécanique intermédiaire est agencé pour convertir un déplacement de la deuxième partie mobile dans une direction en un déplacement de la porte dans une direction généralement similaire.

8. Machine selon l'une quelconque des revendications précédentes, qui comprend un boîtier extérieur (100) et dans laquelle le passage (95, 96) s'étend à partir du boîtier extérieur jusqu'au module de traitement d'ingrédient (10), la porte (90) étant mobile le long du boîtier de manière généralement parallèle à celui-ci.

9. Machine selon l'une quelconque des revendications précédentes, dans laquelle la partie mobile (30) est actionnée par un moteur (51), en particulier commandé par une unité de commande (60) reliée à une interface utilisateur (70).

10. Machine selon l'une quelconque des revendications 1 à 8, dans laquelle la machine comprend une poignée destinée à actionner manuellement la partie mobile.

11. Machine selon l'une quelconque des revendications précédentes, dans laquelle le passage (95, 96) est généralement droit de sorte que ledit ingrédient (2) est apte à être déplacé dans le passage sous l'effet de la gravité.

12. Machine selon l'une quelconque des revendications précédentes, dans laquelle le passage comprend une partie d'insertion (95) guidant l'ingrédient (2) dans le module de traitement (10) et une partie d'évacuation (96) guidant l'ingrédient (2) à partir du module de traitement.

13. Machine selon l'une quelconque des revendications précédentes, dans laquelle la porte (90) est apte à être entraînée dans une direction généralement horizontale.

14. Machine selon la revendication 13, dans laquelle la partie mobile (30) est mobile dans une direction horizontale.

15. Machine selon l'une quelconque des revendications précédentes, dans laquelle la porte (90) est configurée pour supporter dans la position fermée ledit ingrédient (2) et pour libérer l'ingrédient dans ou hors du passage (95, 96) lorsqu'elle est déplacée dans la position ouverte.
